# EUROPEAN PATENT SPECIFICATION

(11) **EP 0 796 498 B1**
(45) Date of publication and mention of the grant of the patent: **09.06.1999**
(21) Application number: 95931977.3
(22) Date of filing: 03.09.1995
(51) Int. Cl.: H01G 9/20

(54) **ELECTROCHEMICAL PHOTOVOLTAIC CELL**
ELEKTROCHEMISCHE PHOTOVOLTAISCHE ZELLE
CELLULE PHOTOVOLTAIQUE ELECTROCHIMIQUE

(30) Priority: 02.09.1994 SE 9402940
(43) Date of publication of application: 24.09.1997
(73) Proprietor: ECOLE POLYTECHNIQUE FEDERALE DE LAUSANNE, 1015 Lausanne (CH)
(72) Inventor: MEYER, Andreas, Felix, CH-1173 Fechy (CH); MEYER, Tobias, Balthasar, CH-1173 Fechy (CH)
(74) Representative: Ganguillet, Cyril
(86) International application number: EP9503459
(87) International publication number: WO9608022

(56) References cited:
- WO-A-91/16719

## Description

### TECHNICAL FIELD

The present invention relates to photovoltaic cells, based on the principle of regenerative photoelectrochemical processes.

### BACKGROUND ART

This type of photovoltaic cells are known from e.g. the International patent application WO 91/16719. This document shows a regenerative photoelectrochemical cell including a first electrode comprising a glass plate, as substrate, coated with an electrically conductive and possibly optically transparent layer on which a thin layer of a metal oxide semiconductor, such as high surface area Titanium dioxide, is deposited. The layer of metal oxide is provided with a monomolecular layer of a sensitizing dye which absorbs the light in the visible part of the spectrum. The dyestuff is cooperating with the oxide by injecting electrons into the conduction band of the same.

A second electrode, the so called "counter electrode", includes a glassplate coated with an electrically conductive and possibly optically transparent layer which in addition might be coated with an electroactive catalyst. The above mentioned electrodes are facing each other and the gap in between is filled with an electrolyte containing a redox couple. The effect of the catalyst is to facilitate the transfer of electrons from the counter electrode to the electrolyte.

In the structure according to the above at least one of the conductive layers has to be transparent so that light can reach the inner part of the cell.

Let us assume that light is entering the cell through the counter electrode. The light will then be absorbed by the dye, as described above, and the dye transfers electrons into the conductive band of the semiconductor oxide. The "hole" created in the dye will be "filled" by an electron donated from the electrolyte in the redox process. In an external circuit a load is connected which allows the generated current to circulate. This working principle is previously known from e.g. the document mentioned above.

One disadvantage of such a two-plate arrangement where the counter electrode is separated from the working electrode by a gap filled with electrolyte is that large scale manufacturing is made complicated especially when it comes to the arrangement of the internal electrical connections.

Furthermore, the gap filled with electrolyte represents an electrical resistance due to the ionic path length, so that the impedance of the cell will be relatively high.

Due to the fact that float glass sheets, which are commonly used in the cells, are presenting irregular thicknesses and wavelike deformation on the surface it will be quite difficult to achieve a regular and narrow gap between the two plates, especially for large cells.

A further difficulty resides in the fact that when the working electrode plate has been coated with a layer of a highly porous metal oxide semiconductor, it will present an irregular surface. The gap between the top surface of the metal oxide semiconductor layer and the counter electrode plate will also for this reason be irregular.

### A BRIEF DESCRIPTION OF THE INVENTION

One object of the invention is to provide an electrochemical photovoltaic cell in which the electrolyte filled gap between the working electrode plate and the counter electrode plate has been eliminated. This will give a more efficient cell due to lower internal impedance.

Another object of the invention is to completely eliminate the counter electrode in the form of a second plate which obviously will make the cell much easier to manufacture. There will e.g. be no alignment problems for the glass plates, a cell of the same surface will be less heavy etc..

The above mentioned objects will be achieved in a photovoltaic cell according to the invention defined by the features of claim 1. In this cell, the counter electrode plate is replaced by a first layer of electrocatalyst material deposited directly on top of the porous metal oxide semiconductor layer on the working electrode. Optionally a second layer of an electrically conductive material, acting as a current collector, can be deposited on top of the first layer comprising the electrocatalyst material.

With this arrangement of the cell according to the invention the deposited layer of electrocatalyst material will be in intimate contact with the top surface of the porous metal oxide semiconductor layer which thus eliminates the gap filled with electrolyte between the working electrode plate and the counter electrode. The electrolyte necessary for the process is now only present as an impregnation of the semiconductor material. The ionic path will thus be minimized and will now only be given by the thickness of the porous metal oxide semiconductor layer.

Another advantage of the invention is that it allows a simple manufacturing of photovoltaic cells on curved substrates in the form of e.g. curved glass plates, with no restrictions on the curvature. There is as a matter of fact no matching required anymore between the working electrode plate, usually made of glass, supporting the metal oxide semiconductor, and the counter electrode, since the electrocatalyst is intimately following the surface of the porous metal oxide semiconductor layer, which in its turn follows the shape of the supporting glass.

A additional object of the invention is to provide a method allowing to manufacture photoelectrochemical cells on irregular surfaces such as non planar surfaces.

### BRIEF DESCRIPTION OF THE FIGURES

Figure 1 shows schematically a photoelectrochemical cell according to the prior art.

Figure 2 shows the photoelectrochemical cell according to the invention.

### DETAILED DESCRIPTION OF THE INVENTION

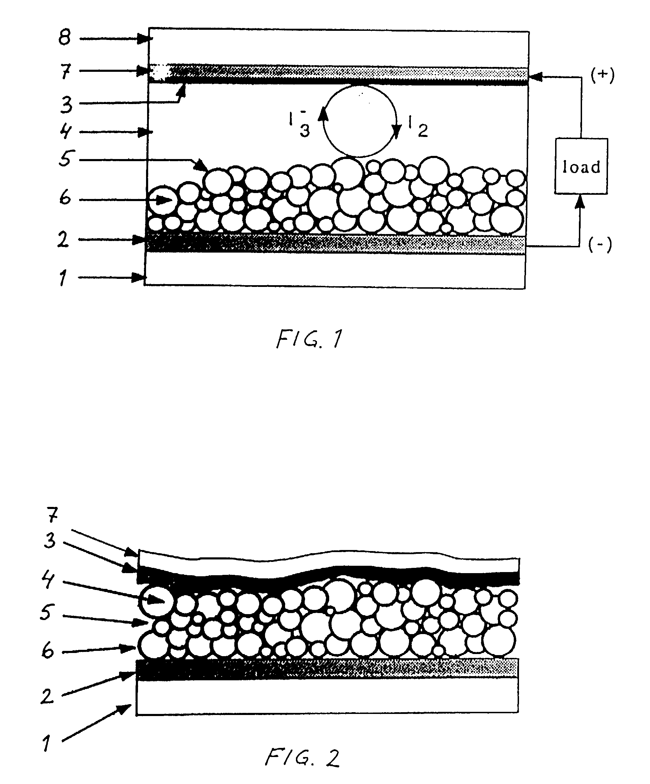

In order to more clearly show and emphasize the differences between the prior art and the photoelectrochemical cell according to the invention an example of a prior art cell is shown in figure 1.

The regenerative photoelectrochemical cell includes a first electrode comprising a glass plate 1, as substrate, coated with an electrically conductive and possibly optically transparent layer 2 on which a thin layer 6 of a metal oxide semiconductor, such as high surface area Titanium dioxide, is deposited. It should be noted that the dimensions and relations between the different dimensions in the figures are not necessarily correct but are chosen to raise the clarity of the figures.

The layer of metal oxide 6 is provided with a monomolecular layer of a sensitizing dye which absorbs the light in the visible part of the spectrum. This technique is known from the prior art. The dyestuff is cooperating with the oxide by injecting electrons into the conduction band of the same.

A second electrode, the so called "counter electrode", includes a glassplate 8 coated with an electrically conductive and possibly optically transparent layer 7 which in addition might be coated with an electroactive catalyst 3. The above mentioned electrodes are facing each other and the gap in between is filled with an electrolyte 4 containing a redox couple. The effect of the catalyst 3 is to facilitate the transfer of electrons from the counter electrode to the electrolyte 4.

In the structure according to the above at least one of the conductive layers 2, 7 has to be transparent so that light can reach the inner part of the cell.

The functioning of a cell according to the prior art has been described above.

As mentioned above it would be possible using the inventive principle to utilize e.g. a curved glass tile as the substrate on which the whole photoelectrochemical cell is build up layer by layer. For the sake of simplicity, however, the cell according to the invention, figure 2, has been shown as a flat structure

The working electrode of the cell according to the invention has a similar structure as the corresponding electrode in the cell according to the prior art. The same designations have been used for corresponding parts.

The counter electrode in the cell according to the invention consists of a layer 3 of an electrocatalyst and preferably a current collecting layer 7. These layers are directly deposited on top of the semiconductor layer 6 which itself is deposited on a plate 1 coated with an electrically conductive and optically transparent layer 2. As in the cell according to the prior art the semiconductor layer is preferably impregnated with sensitizing dye 5.

The electrolyte 4 is filling the interstices between the metal oxide semiconductor crystallites, and is thus retained by capillarity.

The plate 1 could be of glass or another suitable material. Due to the process for depositing the semiconductor layer the material should be heat resistant.

The electrically conductive layer 2 could e.g. comprise fluorine doped tinoxide or indiumoxide doped with tinoxide. And the semiconductor layer could comprise titanium oxide or another wide-band semiconductor material typically a metal oxide deposited with methods according to prior art.

## Claims

1. Regenerative electrochemical photovoltaic cell comprising a first and a second electrode, the first electrode including a plate (1) as substrate, coated with an electrically conductive layer (2), a layer (6) of a semiconductor material applied on said layer (2), an electrolyte (4) impregnating said layer (6) **characterised in that** an electrocatalyst (3) is deposited without supporting substrate directly on the top surface of said semiconductor layer (6) following the topography of said layer (6) which electrocatalyst layer will act as said second electrode.

2. Photovoltaic cell according to claim 1 **characterised in that** the plate (1) is a glass plate.

3. Photovoltaic cell according to claim 1 or 2 **characterised in that** the layer (2) is optically transparent.

4. Photovoltaic cell according to any of the claims 1 to 3 **characterised in that** the layer (6) is a porous, high surface area metal oxide semiconductor.

5. Photovoltaic cell according to claim 4 **characterised in that** the metal oxide semiconductor comprises titanium dioxide.

6. Photovoltaic cell according to any of the claims 1 to 5 **characterised in that** an electrically conductive layer (7) is deposited on top of said electroactive catalyst (3) and constitutes a current collector.

7. Photovoltaic cell according to claim 6 **characterised in that** the electrically conductive layer (7) is optically transparent.

## Patentansprüche

1. Regenerative elektrochemische photovoltaische Zelle, die eine erste und eine zweite Elektrode enthält, wobei die erste Elektrode als Substrat eine Platte (1) aufweist, die mit einer elektrisch leitenden Schicht (2) bedeckt ist, wobei auf dieser Schicht (2) eine Schicht (6) aus einem Halbleitermaterial aufgebracht ist und wobei diese Schicht (6) mit einem Elektrolyten (4) imprägniert ist, dadurch gekennzeichnet, dass ein Elektrokatalysator (3) ohne tragendes Substrat direkt auf der oberen Oberfläche der Halbleiterschicht (6) unter Anpassung an die Topographie der Schicht (6) abgeschieden ist, wobei diese Elektrokatalysatorschicht als zweite Elektrode dient.

2. Photovoltaische Zelle nach Anspruch 1, dadurch gekennzeichnet, dass die Platte (1) eine Glasplatte ist.

3. Photovoltaische Zelle nach Anspruch 1 oder 2, dadurch gekennzeichnet, dass die Schicht (2) optisch transparent ist.

4. Photovoltaische Zelle nach einem der Ansprüche 1 bis 3, dadurch gekennzeichnet, dass die Schicht (6) ein poröser Metalloxid-Halbleiter mit großem Oberflächenbereich ist.

5. Photovoltaische Zelle nach Anspruch 4, dadurch gekennzeichnet, dass der Metalloxid-Halbleiter Titandioxid enthält.

6. Photovoltaische Zelle nach einem der Ansprüche 1 bis 5, dadurch gekennzeichnet, dass eine elektrisch leitende Schicht (7) auf der Oberfläche des Elektrokatalysators (3) abgeschieden ist und einen Stromkollektor bildet.

7. Photovoltaische Zelle nach Anspruch 6, dadurch gekennzeichnet, dass die elektrisch leitende Schicht (7) optisch transparent ist.

## Revendications

1. Cellule photovoltaïque électrochimique à régénération comprenant une première et une deuxième électrode, la première électrode incluant une plaque (1) en tant que substrat, revêtue d'une couche électriquement conductrice (2), une couche (6) d'un matériau semi-conducteur appliquée sur ladite couche (2), ladite couche (6) étant imprégnée d'un électrolyte (4), caractérisée en ce qu'un électrocatalyseur (3) est déposé, sans qu'il supporte de substrat, directement sur la surface supérieure de ladite couche de semi-conducteur (6) en suivant la topographie de ladite couche (6), laquelle couche d'électrocatalyseur jouera le rôle de ladite seconde électrode.

2. Cellule photovoltaïque selon la revendication 1, caractérisée en ce que la plaque (1) est une plaque en verre.

3. Cellule photovoltaïque selon la revendication 1 ou 2, caractérisée en ce que la couche (2) est optiquement transparente.

4. Cellule photovoltaïque selon l'une quelconque des revendications 1 à 3, caractérisée en ce que la couche (6) est un semi-conducteur d'oxyde métallique, poreux, à haute aire de surface.

5. Cellule photovoltaïque selon la revendication 4, caractérisée en ce que le semi-conducteur d'oxyde métallique comprend du dioxyde de titane.

6. Cellule photovoltaïque selon l'une quelconque des revendications 1 à 5, caractérisée en ce qu'une couche électriquement conductrice (7) est déposée au-dessus dudit catalyseur électroactif (3) et constitue un collecteur de courant.

7. Cellule photovoltaïque selon la revendication 6, caractérisée en ce que la couche électriquement conductrice (7) est optiquement transparente.
